Europäisches Patentamt

European Patent Office

Office européen des brevets

(11) Publication number: 0 280 374
A2

# EUROPEAN PATENT APPLICATION

(21) Application number: 88200326.2

(22) Date of filing: 22.02.88

(51) Int. Cl.4: C08G 67/02 , C07F 9/74 , C07F 9/92

(30) Priority: 23.02.87 NL 8700443

(43) Date of publication of application:
31.08.88 Bulletin 88/35

(84) Designated Contracting States:
BE DE FR GB IT NL

(71) Applicant: SHELL INTERNATIONALE
RESEARCH MAATSCHAPPIJ B.V.
Carel van Bylandtlaan 30
NL-2596 HR Den Haag(NL)

(72) Inventor: Van Doorn, Johannes Adrianus
Badhuisweg 3
NL-1031 CM Amsterdam(NL)
Inventor: Drent, Eit
Badhuisweg 3
NL-1031 CM Amsterdam(NL)
Inventor: Snel, Johannes Jacobus Maria
Badhuisweg 3
NL-1031 CM Amsterdam(NL)

(74) Representative: Aalbers, Onno et al
P.O. Box 302
NL-2501 CH The Hague(NL)

(54) Catalyst compositions and process for copolymerizing CO with one or more olefinically unsaturated compounds.

(57) Novel catalyst composition, comprising
    a) a palladium compound,
    b) an anion of an acid with a pKa of less than 4, and
    c) a compound of the general formuls $R_1R_2M_1-R-M_2R_3R_4$, wherein $M_1$ is arsenic or antimony, $M_2$ is an element having an atomic number lower than that of $M_1$ and being chosen from the group made up of arsenic, phosphorus and nitrogen, $R_1$, $R_2$, $R_3$ and $R_4$ represent similar or different hydrocarbyl groups which may or may not be substituted with polar groups and R represents a bivalent bridging group having 2-4 atoms in the bridge.

EP 0 280 374 A2

# CATALYST COMPOSITIONS AND PROCESS FOR COPOLYMERIZING CO WITH ONE OR MORE OLEFINICALLY UNSATURATED COMPOUNDS

The invention relates to novel compositions which are suitable for use as catalysts in the preparation of carbon monoxide with one or more olefinically unsaturated compounds.

Research made by the Applicant into the preparation of high molecular weight polymers of carbon monoxide with one or more olefinically unsaturated compounds (for the sake of brevity referred to as A), in which the monomer units occur in alternating order and which polymers therefore consist of units of the general formul -CO-(A')-, wherein A' represents a monomer unit derived from a monomer A used, has recently shown that these polymers can be prepared by using catalyst compositions based upon

a) a palladium compound,

b) an anion of an acid with a pKa of less than 4, and

c) a diarsine or distibine of the general formula $R_1R_2M-R-MR_3R_4$, wherein M is arsenic or antimony $R_1$, $R_2$, $R_3$ and $R_4$ represent similar or different hydrocarbyl groups which may or may not be substituted with polar groups, and R represents a bivalent bridging group holding 2-4 atoms in the bridge.

Further research into this subject has now revealed that catalyst compositions which can be regarded as being derived from the above-mentioned compositions by replacing one of the arsenic or antimony atoms in the component c) by an atom with a lower atomic number chosen from the group made up of arsenic, phosphorus and nitrogen, exhibit attractive activities for the present polymerization. More in general, it has been found that catalyst compositions which have attractive activities for the polymerization of carbon monoxide with one or more olefinically unsaturated compounds can be composed on the basis of the afore-mentioned components a) and b) and a compound of the general formula $R_1R_2M_1-R-M_2R_3R_4$, wherein $M_1$, is arsenic or antimony, $M_2$ is an element with an atomic number lower than that of $M_1$, and is chosen from the group made up of arsenic, phosphorus and nitrogen and $R_1$-$R_4$ have the meanings defined hereinbefore, as the component c).

Catalyst compositions based upon components a) and b) and a compound of the general formula $R_1R_2M_1-R-M_2-R_3R_4$ as component c) are novel compositions. A number of the compounds eligible for use in the novel catalyst compositions as the component c) are also novel compounds.

Therefore, the present patent application relates to novel catalyst compositions based upon

a) a palladium compound,

b) an anion of an acid with a pKa of less than 4, and

c) a compound of the general formula $R_1R_2M_1-R-M_2R_3R_4$, wherein $M_1$, $M_2$, $R_1$, $R_2$, $R_3$ and $R_4$ and R have meanings as defined hereinbefore.

The patent application further relates to the use of these catalyst compositions in the preparation of polymers of carbon monoxide with one or more olefinically unsaturated compounds as well as to the polymers thus prepared and to shaped objects consisting at least partly of these polymers. Finally, the patent application relates to a number of the compounds eligible for use in the catalyst compositions as the component c), as novel compounds, as well as to a process for the preparation of these compounds.

The palladium compound used as component a) is preferably a palladium salt of a carboxylic acid, and palladium acetate in particular. As examples of suitable acids with a pKa of less than 4 (determined in aqueous solution at 18 °C), whose anions should be present in the catalyst compositions as the components b), may be mentioned, inter alia, mineral acids, such as perchloric acid, sulphuric acid, phosphoric acid and nitrous acid, sulphonic acids, such as 2-hydroxypropane-2-sulphonic acid, para-toluenesulphonic acid, methane sulphonic acid and trifluoromethane sulphonic acid, and carboxylic acids, such as trifluoro acetic acid, trichloroacetic acid, dichloroacetic acid, difluoro acetic acid, tartaric acid and 2,5-dihydroxybenzoic acid. The catalyst composition preferably contains an anion of an acid with a pKa of less than 2, and in particular an anion of a sulphonic acid, such as para-toluenesulphonic acid, or an anion of a carboxylic acid, such as trifluoro acetic acid, as the component b). Preferably, component b) is present in the catalyst compositions in a quantity of from 0.5 to 200 and in particular of from 1.0 to 100 equivalents per gram atom of palladium. Component b) may be included in the catalyst compositions either in the form of an acid or in the form of a salt. Eligible salts are, among others, non-noble transition metal salts. When component b) is applied in the form of a salt of a non-noble transition metal, preference is given to a copper salt. If desired, components a) and b) may be combined in a single compound. An example of such a compound is palladium paratosylate.

Compounds that are eligible to be used as the component c) in the catalyst compositions according to the invention have the general formula $R_1R_2M_1-R-M_2R_3R_4$, wherein $M_1$ is arsenic or antimony, $M_2$ is an element having an atomic number lower than that of M, and being chosen from the group made up of arsenic, phosphorus and nitrogen, $R_1$-$R_4$ represent similar or different hydrocarbyl groups which may or may not be substituted with polar groups and R represents a bivalent bridging group containing 2-4 atoms in the bridge. On the strength of the afore-mentioned difinition, compounds of the general formula $R_1R_2M_1$-R-$M_2R_3R_4$, wherein $M_1$ is arsenic and $M_2$ phosphorus or nitrogen, as well as compounds in which $M_1$ is antimony and $M_2$ is arsenic, phosphorus or nitrogen are therefore eligible for use as the component c). Preference is given to compounds in which $R_1$ and $R_2$ represent similar or different aryl groups which may or may not be substituted with polar groups.

Examples of polar-substituted aryl groups that may be mentioned are aryl groups having an alkoxy group, such as a methoxy group, in an ortho and/or para position in respect to arsenic or antimony. If $M_2$ is an element chosen from phosphorus and arsenic, $R_3$ and $R_4$, too, should preferably be similar or different aryl groups which may or may not be substituted with polar groups. If $M_2$ is an element chosen from phosphorus or arsenic, preference is given to compounds in which the groups $R_1$-$R_4$ are similar to one another. If $M_2$ is nitrogen, preference is given to compounds in which $R_3$ and $R_4$ are alkyl groups. As regards the bridging group R which occurs in the compound, preference is given to groups R containing three carbon atoms in the bridge. Examples of compounds eligible to be used as the components c) present in the catalyst compositions according to the invention are
1-(diphenyl-stibino),4-(diphenyl-arsino)butane,
1-(diphenyl-stibino),3-(diphenyl-phosphino)propane,
1-(diphenyl-stibino),4-(diphenyl-phosphino)butane,
1-(diphenyl-stibino),3-(dipmethyl-amino)propane,
1-(diphenyl-arsino),4-(diphenyl-phosphino)propane,
1-(diphenyl-arsino),2-(diphenyl-phosphino)ethane,
and 1-(diphenyl-arsino),3-(dimethyl-amino)propane.

Preference is given to the use of compounds of the general formula $R_1R_2M_1$-R-$PR_3R_4$, wherein $M_1$ is arsenic or antimony, $R_1$-$R_4$ are similar or dissimilar aryl groups which may or may not be substituted with polar groups and R represents a bivalent bridging group holding three carbon atoms in the bridge. These are novel compounds. They can be prepared, for instance, by the reaction of a compound of the general formula $R_1R_2M_1$-X with a compound of the general formula $R_3R_4$P-R-Y, in which formulae $M_1$, $R_1$-$R_4$ and R have the meanings defined hereinbefore and X and Y represent an alkali metal and a halogen atom, respectively. Thus can be prepared for instance 1-(diphenyl-arsino), 3-(diphenyl-phosphino)propane and 1-(diphenyl-stibino), 3-(diphenyl-phosphine)propane, by way of the reaction of $(C_6H_5)_2$P-$CH_2$-$CH_2$-$CH_2$Cl with $(C_6H_5)$-

$_2$AsNa and $(C_6H_5)_2$SbNa, respectively. The latter two compounds can be obtained for instance by the reaction of triphenyl arsine and triphenyl stibine, respectively, with sodium in liquid ammonia.

Preferably, component c) is used in the catalyst compositions of the invention in a quantity of 0.1-3 and in particular of 0.72-2 mol per mol of palladium compound.

In order to enhance the activity of the present catalyst compositions, it is preferred to include therein a quinone, as a component d). Besides substituted or unsubstituted benzoquinones, other quinones, such as substituted or unsubstituted naphthaquinones and anthraquinones, may also be used. Preference is given to benzoquinones, and to 1,4-benzoquinones in particular. The quantity in which the quinone is used is preferably 1-10 000 and in particular 10-5000 mol per gram atom of palladium.

The polymerization using catalyst compositions of the invention is suitably carried out in a liquid diluent. Very suitable liquid diluents are lower alcohols such as methanol and ethanol. Optionally, the polymerization may be executed in the gaseous phase.

Both compounds consisting exclusively of carbon and hydrogen and compounds comprising one or more heteroatoms in addition to carbon and hydrogen are olefinically unsaturated compounds which are eligible for polymerization with carbon monoxide using the catalyst compositions of the invention. The catalyst compositions of the invention are preferably used to prepare polymers of carbon monoxide with one or more olefinically unsaturated hydrocarbons. Examples of suitable hydrocarbon monomers are ethane and further α-olefins, such as propene, butene-1, hexene-1 and octene-1 as well as styrene and alkyl-substituted styrenes, such as p-methyl styrene an p-ethyl styrene. The catalyst compositions of the invention are especially suited for use in the preparation of copolymers of carbon monoxide with ethene and in the preparation of terpolymers of carbon monoxide with ethene and another olefinically unsaturated hydrocarbon, propene in particular.

The quantity of catalyst composition used in the preparation of the polymers may vary within wide ranges. Per mol of olefincally unsaturated compound to be polymerized, such a quantity of catalyst is used as to contain, suitably, $10^{-7}$-$10^{-3}$ and in particular $10^{-5}$-$10^{-4}$ gram atom of palladium.

The polymer preparation is preferably carried out at a temperature of 20-200 °C and a pressure of 1-200 bar and in particular at a temperature of 30-150 °C and a pressure of 20-100 bar. In the mixture to be polymerized, the molar ratio of olefinically unsaturated compounds relative to carbon monoxide suitably amounts to 10:1-1:5 and in particular 5:1-1:2. The carbon monoxide used in the preparation of the polymers of the invention need not be pure. It may contain such contaminants as hydrogen, carbon dioxide and nitrogen.

The invention will now be illustrated with the aid of the following examples.

Example 1

1-(diphenyl-phosphino), 3-(diphenyl-arsino)-propane was prepared as follows. To 300 ml liquid ammonia present in a mechanically stirred reaction vessel which was kept at -78 °C by cooling were consecutively added 2 g of sodium and 13.1 g of triphenyl arsine. After one hour, 2,3 g of ammonium chloride was added to the reaction mixture and subsequently after 30 minutes, was added a solution of 11.3 g of 1-(diphenyl-phosphino), 3-chloropropane in 100 ml of dry tetrahydrofuran. After the cooling had been cut off, the reaction mixture was stirred for another 12 hours. Ethyl acetate and water were added to the reaction mixture. The organic layer obtained was separated and dried over magnesium sulphate. The drying agent was filtered off and then the solvent was evaporated in vacuo. The crude 1-(diphenyl-phosphino), 3-(diphenyl-arsino)propane thus obtained was purified by recrystallization from ethanol.

Example 2

1-(diphenyl-phosphino), 3-(diphenyl-stibino)-propane was prepared substantially in the same way as the 1-(diphenyl-phosphino), 3-(diphenyl-arsino)propane of Example 1, except that now 15.2 g of triphenyl stibine was added instead of 13.1 g of triphenyl arsine.

Example 3

A carbon monoxide/ethene copolymer was prepared as follows. A magnetically stirred autoclave of 100 ml capacity was charged with a catalyst solution comprising:
20 ml methanol,
0.05 mmol palladium acetate,
0.075 ml trifluoroacetic acid and
0.06 mmol 1,3-bis(diphenyl-arsino)propane.
After the air present in the autoclave was removed by evacuation, ethene was introduced until a pressure of 15 bar was reached, followed by carbon monoxide until a pressure of 30 bar was reached. Next, the contents of the autoclave were brought to 80 °C. After 1 hour the polymerization was terminated by cooling to room temperature and releasing the pressure. The copolymer was filtered off, washed with methanol and dried in vacuo at room temperature. The yield was 2.3 g of copolymer.

Example 4

A carbon monoxide/ethene copolymer was prepared substantially in the same way as the copolymer of Example 3, the differences being
a) the catalyst solution contained 0.06 mmol 1-(diphenyl-phosphino), 3-(diphenyl-arsino)propane instead of 1,3-bis-(diphenyl-arsino)propane, and
b) the reaction time was 1.5 hour instead of 1 hour. The yield was 3.3 g of copolymer.

Example 5

A carbon monoxide/ethene copolymer was prepared substantially in the same way as the copolymer of Example 3, the differences being
a) the catalyst solution contained 0.06 mmol 1-(diphenyl-phosphino), 3-(diphenyl-stibino)propane instead of 1,3-bis-(diphenyl-arsino)propane, and
b) the reaction time was 1.5 hour instead of 1 hour. The yield was 0.2 g of copolymer.

Example 6

A carbon monoxide/ethene copolymer was prepared substantially in the same way as the copolymer of Example 3, the differences being
a) the catalyst solution contained 0.06 mmol 1-(diphenyl-arsino), 3-(diphenyl-amino)propane instead of 1,3-bis-(diphenyl-arsino)propane, and
b) the reation time was 1.5 hour instead of 1 hour. The yield was 0.31 g of copolymer.

Example 7

A carbon monoxide/ethene copolymer was prepared substantially in the same way as the copolymer of Example 3, the differences being
a) the autoclave had a volume of 300 ml instead of 100 ml,
b) a catalyst solution was used which comprised
50 ml methanol,
0.1 mmol palladium acetate
2 mmol para-toluenesulphonic acid and
0.15 mmol 1-(diphenyl-phosphino), 2-(diphenyl-arsino)ethane,

c) upon evacuation of the autoclave, ethene was introduced until a pressure of 20 bar was reached, followed by carbon monoxide until a pressure of 50 bar was reached, and

d) the reaction time was 5 hours instead of 1 hour. The yield was 3.5 g of copolymer.

Of Examples 1-7, Examples 1, 2 and 4-7 are examples in accordance with the invention. Examples 1 and 2 describe the preparation of novel compounds of the general formula $R_1R_2M_1$-$R$-$PR_3R_4$, wherein $M_1$ is arsenic or antimony, $R_1$-$R_4$ represent phenyl groups and R represents a bivalent bridging group holding three carbon atoms in the bridge. In Examples 4-7, polymers were prepared by using catalyst compositions containing, as the component c), a compound of the general formula $R_1R_2M_1$-$R$-$M_2R_3R_4$, wherein $M_1$ is arsenic or antimony, $M_2$ is phosphorus or nitrogen, $R_1$-$R_4$ represent hydrocarbyl groups and R represents a bivalent bridging group holding 2 or 3 carbon atoms in the bridge. Example 3, in which a polymer was prepared by using a catalyst composition having a biarsine as the component c), is outside the scope of the invention. This example has been included in the patent application for comparison. The carbon monoxide/ethene copolymers prepared according to Examples 3-7 had a melting point of 257 °C. With the aid of $^{13}$C-NMR it was established that these polymers had a linear alternating structure and therefore consisted of units of the formula -CO-$(C_2H_4)$-.

## Claims

1. Novel catalyst compositions, comprising
a) a palladium compound,
b) an anion of an acid with a pKa of less than 4, and wherein $M_1$ is arsenic or antimony, $M_2$ is an element having an atomic number lower than that of $M_1$ and being chosen from the group made up of arsenic, phosphorus and nitrogen, $R_1$, $R_2$, $R_3$ and $R_4$ represent similar or different hydrocarbyl groups which may or may not be substituted with polar groups and R represents a bivalent bridging group having 2-4 atoms in the bridge.

2. Catalyst compositions as claimed in claim 1, characterized in that they comprise a palladium salt of a carboxylic acid as component a).

3. Catalyst compositions as claimed in claim 1 or 2, characterized in that component b) is present therein in a quantity of from 1.0 to 100 equivalent per gram atom of palladium.

4. Catalyst compositions as claimed in claim 1-3, characterized in that component b) is present therein in the form of an acid or in the form of a non-noble transition metal salt, preferably a copper salt.

5. Catalyst compositions as claimed in any one of claims 1-4, characterized in that as component c) they include a compound in which $R_1$, $R_2$, $R_3$ and $R_4$ represent similar or different aryl groups which may or may not be substituted with polar groups and in which $M_2$ is phosphorus or arsenic.

6. Catalyst compositions as claimed in any one of claims 1-4, characterized in that as component c) they include a compound in which $M_2$ is nitrogen and $R_3$ and $R_4$ are alkyl groups.

7. Catalyst compositions as claimed in any one of claims 1-6, characterized in that component c) is present therein in a quantity of from 0.75 to 3 mol per mol of palladium compound.

8. Catalyst compositions as claimed in any one of claims 1-7, characterized in that in addition they include a quinone, such as 1,4-benzoquinone, as a component d), in a quantity of from 10 to 5000 mol per gram atom of palladium.

9. Process for the preparation of polymers, characterized in that a mixture of carbon monoxide and one or more olefinically unsaturated compounds is polymerized by using a catalyst composition as claimed in any one of claims 1 to 8.

10. Process as claimed in claim 9, characterized in that ethene or a mixture of ethene and propene is copolymerized with carbon monoxide.

11. Novel compounds of the general formula $R_1R_2M_1$-$R$-$PR_3R_4$, wherein $M_1$ is arsenic or antimony, $R_1$, $R_2$, $R_3$ and $R_4$ represent similar or different aryl groups which may or may not be substituted with polar groups, and R represents a bivalent bridging group holding three carbon atoms in the bridge.

12. As novel compounds in accordance with claim 11: 1-(diphenyl-arsino), 3-(diphenyl-phosphino)propane and 1-(diphenyl-stibino), 3-(diphenyl-phosphino)propane.